# EUROPEAN PATENT APPLICATION

(11) **EP 1 594 043 A2**
(43) Date of publication of application: **09.11.2005**
(21) Application number: 05009706.2
(22) Date of filing: 03.05.2005
(51) Int. Cl.: G06F 3/033

(54) **Information input device and information input method**

(30) Priority: 07.05.2004 JP 2004139105
(71) Applicant: Pioneer Corporation, Tokyo 153-8654 (JP)
(72) Inventor: Shinokura, Kiichiro c/o Oomori Koujou, Tokyo 143-8564 (JP)
(74) Representative: Sajda, Wolf E.

(57) **Abstract**

It is an object of the invention to provide an information input device capable of performing a minute position input corresponding to a large display screen having a high resolution. The information input device comprises: a plate-like input member (11) slidable by fingertip of one hand; an information creating section for creating input information in response to at least a relative position or a relative displacement of the plate-like member (11); and vibration generating means (an uneven surface 11a₀ and a convex portion 12a₀) for generating a vibration by virtue of a relative movement of a sliding surface (11a) of the plate-like member (11). By propagating the generated vibration to fingertip, it is possible for an operator (user) to recognize an amount of a relative movement of the plate-like member (11).

## Description

### BACKGROUND OF THE INVENTION

The present invention relates to an information input device and an information input method.

With the diversification of functions of audiovisual equipment, electric household appliances, industrial apparatuses, computers, and the like, the amounts of information to be inputted thereto have been increasing. Accordingly, information input devices have become complicated, with deterioration in human friendliness.

Further, many apparatuses or appliances often have high resolution display devices, and some information input devices employ GUI (Graphical User Interface). On the other hand, there has not been in practical use an appropriate information input device (a pointing device or the like) which has an operational resolution comparable to the resolution of display device, hence rendering it difficult to use these apparatuses or appliances.

Take, for example, a mouse which is a typical pointing device for PCs and the like. It requires a certain area of plate-like space such as a tabletop for operation, but cannot be operated freely if it is held in hand. Moreover, since a mouse is operated using wrist and elbow, it is difficult to perform a minute position input operation so that such a device is thus far from being an information input device having a high operational resolution. On the other hand, a portable PC is often equipped with an information input device which is a touch panel type. However, since the touch-panel type device detects the position of an object which is in fact a finger, the operational resolution is extremely poor and feeling of friction at the fingertip might also be unpleasant.

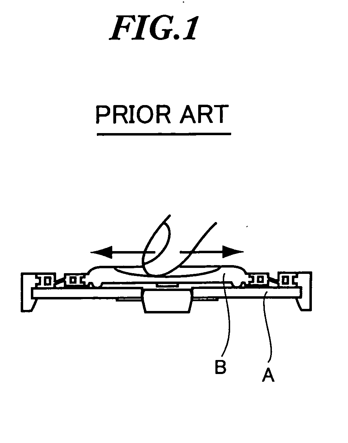

Generally, it is said that the highest operational resolution among those of human operations can result from fingertips. However, an information input device adapted to be operated by fingertips and disclosed in Japanese Unexamined Patent Application Publication Hei. No. 10-207616 is formed in such a manner that an input unit B (operating unit) can slide on a plane with respect to a device body A (base portion), so as to detect a displacement of the input unit by virtue of a sensor provided on the lower portion of the input unit B (refer to Fig.1).

However, as in the prior art mentioned above, if an input device is formed only by a sliding structure and a displacement sensor, or in a manner such that only one finger is needed to perform an operation with respect to a fixed device body, an operational resolution of a fingertip can not catch up with a resolution or a sensitivity of the displacement sensor if they are increased to a high level (it is said that a relative positional resolution when an object is moved is only about 1-1.5 mm), hence rendering it impossible to perform a minute input operation. As a result, even if it is allowed to consider using the above-described prior art in GUI pointing device, it is still impossible to obtain a high operational resolution corresponding to a high resolution or wide display screen.

On the other hand, it is easy to clamp human being's hair (having a diameter of about 10 µm and a perimeter of about 30 µm) between a person's thumb and an index finger, induce a skin feeling of the thumb and index finger, and intentionally effect a minor rotation which is 1/10 rotation. In this way, it is possible to effect a relative position change of several micrometers, ensuring an extremely high susceptibility with respect to the relative position change between fingertips of the person.

Moreover, it is possible for human being's fingers to sense various external stimuli such as a vibration and a heat. Especially, human being's fingers are capable of sensitively sensing a vibration stimulus (no matter whether such a vibration has a high frequency or a low frequency) even if it is an extremely small vibration. For example, it is said that a feeling receptor under the skin of a finger can have a sensitivity which can respond to a vibration stimulus of a submicron level at about hundreds of Hz.

Although it is understood that human being's fingertips have an extremely high operational resolution, a conventional information input device is in a structure which fails to fully demonstrate suchanability. Namely, when using a conventional information input device, an operator (user) will be in his or her mentally stressed state if he or she tries to perform a minute input, hence making him or her tired both mentally and physically.

### SUMMARY OF THE INVENTION

The present invention has been achieved to address the foregoing problems. Thus, it is an object of the present invention to provide an information input device or an information input method having a high operational resolution so as to make the input device suitable for a high vibration response of human being's fingers. For example, the present invention is to provide such an information input device or an information input method that when the input device is used as a GUI input device, it is possible to perform a minute position input on a high resolution or wide display screen.

To achieve the foregoing object, the information input device and the information input method of the present invention comprises at least the following features according to the following aspects.

According to one aspect of the present invention, there is provided an information input device comprising: a plate-like input member slidable by fingertip of one hand; an information creating section for creating input information in response to at least a relative position or a relative movement of the plate-like member; vibration generating means for generating a vibration by virtue of a relative movement of a sliding surface of the plate-like member. Inparticular, the generated vibration is propagated to the fingertip so as to allow an operator to recognize an amount of the relative movement of the plate-like member.

According to another aspect of the present invention, there is provided an information input device comprising: two pieces of plate-like input members adapted to be held between fingertips or portions of fingers on one hand and relatively slidable with respect to each other; an information creating section for creating input information in response to at least a relative position or a relative movement of the plate-like members; vibration generating means for generating a vibration by virtue of a relative movement between sliding surfaces of the plate-like members. In particular, the generated vibration is propagated to the fingertips so as to allow an operator to recognize an amount of the relative movement between the plate-like members.

According to a further aspect of the present invention, there is provided an information input method wherein a plate-like member is slid by fingertip of one hand to create input information in response to a relative position or a relative movement of a sliding surface of a plate-like input member. Further, the sliding surface is moved relatively to generate a vibration which is then propagated to the fingertip, thereby allowing an operator to recognize an amount of the relative movement of the plate-like member.

### BRIEF DESCRIPTION OF THE DRAWINGS

These and other obj ects and advantages of the present invention will become clear from the following description with reference to the accompanying drawings, wherein:
Fig. 1 is an explanatory view showing a prior art;
Fig. 2 is an explanatory view showing an important portion of an information input device formed according to an embodiment of the present invention;
Fig. 3A is a plan view showing the structure of an information input device formed according to an embodiment of the present invention, and Fig. 3B is a sectional view showing the same device;
Figs. 4A and 4B are explanatory views showing vibration generating means provided in an information input device formed according to an embodiment of the present invention;
Figs. 5A and 5B are explanatory views showing the configuration of uneven surfaces of the vibration generating means;
Figs. 6A and 6B are explanatory views showing application of uneven surfaces of the vibration generating means; and
Fig. 7 is an explanatory view showing an example of an information creating section of an information input device formed according to an embodiment of the present invention.

### DETAILED DESCRIPTION OF THE PREFERRED EMBODIMENTS

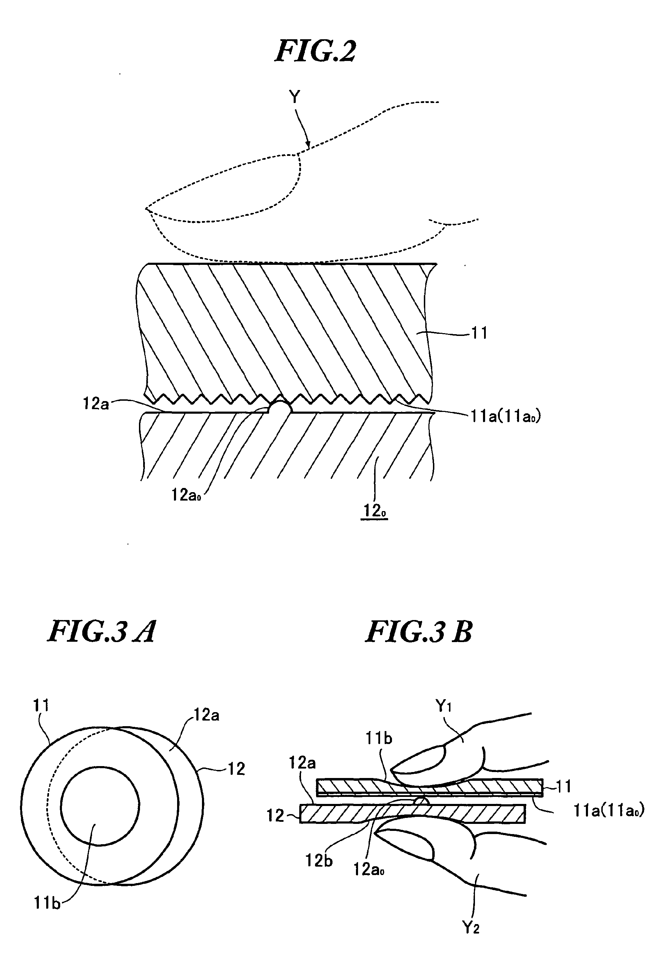

In the following, an embodiment of the present invention will be described with reference to the accompanying drawings. Fig. 2 is an explanatory view showing an important portion of an information input device formed according to an embodiment of the present invention. As shown, the information input device comprises: a plate-like input-member 11 slidable by a fingertip Y of one hand; an information creating section (not shown) for creating input information in response to at least either a relative position or a relative movement of the plate-like input member 11; and vibration generating means for generating a vibration by virtue of a relative movement of a sliding surface 11a of the plate-like input member 11. In this way, by propagating a generated vibration to the fingertip Y, it is possible for an operator (user) to recognize an amount of a relative movement of the plate-like input member 11.

Here, the plate-like input member 11 is a kind of member capable of sliding relatively with respect to an object 12ₒ which can be either the input device itself or another plate-like input member as shown in an embodiment of Fig. 3.

According to such an information input device, by sliding the plate-like input member with a fingertip of one hand, an input information can be created in response to either a relative position or a relative movement of the sliding surface 11a of the plate-like input member 11. At this time, a vibration will be generated with the relative movement of the sliding surface 11a, and such a vibration will be propagated to the fingertip Y, thereby allowing the user to recognize an amount of the relative movement of the plate-like input member 11.

With regard to the aforementioned vibration generating means, an unevenness (uneven surface 11a₀) is formed on at least one of the sliding surface 11a of the plate-like input member 11 and a sliding surface 12a of the sliding object 12₀ (although Figs. 2 and 3 indicate that such an uneven surface 11a₀ is formed only on the sliding surface 11a). Further, a convex portion 12a₀ is formed on the sliding surface 12a of the sliding object 12₀. In this way, a vibration can be generated and propagated to the fingertip Y by sliding the plate-like input member 11 (having the uneven surface 11a₀) over the convex potion 12a₀. On the other hand, even if the convex portion is formed on the sliding surface 11a of the plate-like input member 11 and the unevenness is formed on the sliding face 12a of the sliding object 12a₀, or even if such sliding surfaces 11a and 12a both have the unevenness (uneven surfaces) thereon, it is still possible to generate such a vibration during the sliding movement of the plate-like input member 11.

Namely, by sliding the plate-like input member 11 using a fingertip of one hand, a vibration can be generated by the vibration generating means and then propagated to the fingertip. However, it is also possible for a tactile receptor of the fingertip to sense even a minor vibration (there are several kinds of sensory receptors which are Merkel cell; SAI, Ruffini terminal; SAll, Misner corpuscle; RA, Pacini corpuscle; and PC, among which a receptor called PC responsive to a high-speed pressure fluctuation is particularly sensitive to even a weak vibration and has a sensitive range of 10 Hz - 300 Hz or broader.

Further, the other receptors also have their own specific pressure susceptibilities). Therefore, for example, once a vibration generating structure in which a vibration of several tens of Hz corresponds to a change of several tens of µm is formed on the sliding surface 11a, a vibration sensitivity on the human side will then be converted into a positional displacement recognizing ability, thereby making it possible to perform a minute position input of several tens of µm. Moreover, if the plate-like input member 11 contains a vibration attenuating material capable of attenuating a superfluous high frequency vibration component, it is possible to remove a vibration which becomes a noise and to propagate to the fingertip only a kind of vibration suitable to a minute input.

Fig. 3 shows an example of the structure of an information input device according to an embodiment of the present invention (Fig. 3A is a plan view and Fig. 3B is a sectional view). As shown in Fig. 3, the information input device comprises: two pieces of plate-like input members 11, 12 capable of being held between fingertips of one hand or portions of fingers Y1, Y2 and sliding relatively to each other; an information creating section (not shown) for creating an input information in response to at least either the relative position or the relative movement of the plate-like input members 11, 12; and vibration generating means for generating a vibration by virtue of a relative movement between the sliding surfaces 11a, 12a of the plate-like input members 11, 12. In this way, the generated vibration can be propagated to the fingertips so as to allow the user to recognize a relative momentum between the plate-like input members 11, 12.

Here, in a similar manner to the embodiment shown in Fig. 2, an uneven surface 11a₀ is formed on the sliding surface 11a, while the vibration generating means is formed by i) the convex portion 12a₀ formed on the sliding surface 12a and ii) the uneven surface 11a₀. If necessary, contact surfaces 11b, 12b to be contacted by the fingertips or portions of fingers are formed on the plate-like input members 11, 12, while the plate-like input members 11, 12 themselves are kept close to each other

According to the present embodiment, it is possible to obtain the following advantages in addition to those obtainable in the embodiment described earlier. Namely, since the input device is operated by holding both the plate-like members 11, 12 between the fingertips or portions of fingers, it is possible to obtain a desired portability by one hand and increase an operational freedom, thereby making it possible for a user to perform an input operation in various positions. Moreover, since the basic input operation of such information input device is to slide the two plate-like members 11, 12 against each other while holding them between the fingertips or portions of fingers, it is possible to perform an input operation (sliding fingertips against each other) having a high operational resolution. Further, since the whole operation is carried out by fingertips which allow an operator (user) to concentrate his or her attention to the operation, it is easy for the user to reflect his or her intention in the operation, perform a minute position input operation, and prevent a mistaken input. Namely, the information input device of the present embodiment has an increased operational freedom and an increased operational resolution, thereby ensuring an accurate information input operation.

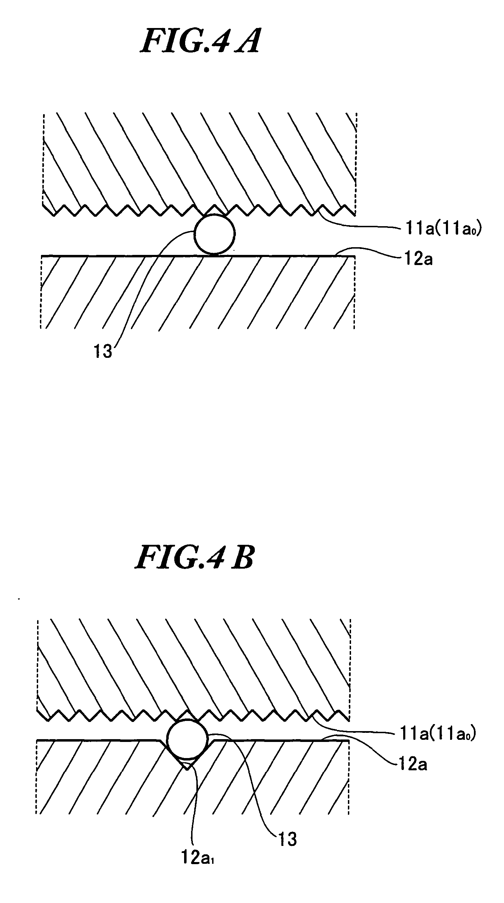

Fig. 4 shows another example of the vibration generating means provided in the information input device according to an embodiment of the present invention. Specifically, the vibration generating means is formed by interposing one or more (preferably, three or more) spherical bodies (or cylindrical bodies) 13 each having a small curved surface between the sliding surfaces 11a and 12a of the information input device, in a manner such that a vibration can be generated by moving the small curved surface against the uneven surface 11a₀. In more detail, Fig. 4A shows an example in which one spherical body is disposed on the sliding surface 12a, while Fig. 4B shows that a recess portion 12a₁ (which can be conic to receive a spherical body or V-shaped groove to receive a cylindrical body) is formed on the sliding surface 12a, so that the spherical body (or cylindrical body) 13 can be rotatably kept within the recess portion 12a₁.

According to the present embodiment, in addition to the advantages obtainable in the embodiments described earlier, the rolling action of the spherical body 13 or a cylindrical body makes it possible to smoothly slid the plate-like input members 11 and 12, and allow the minute curved surface 11a₀ of the spherical body or the cylindrical body to move over the uneven surface 11a₀, thereby generating a vibration having an appropriate frequency. Here, the diameter of the spherical body or the cylindrical body is set to be larger than the roughness of the uneven surface 11a₀. preferably 10 times the roughness of the uneven surface 11a₀. Moreover, when the spherical body 13 is rotatably held on the sliding surface 12a, it is possible to hold the spherical body 13 at a desired position contacted by a finger, thereby exactly transmitting a vibration to the fingertip.

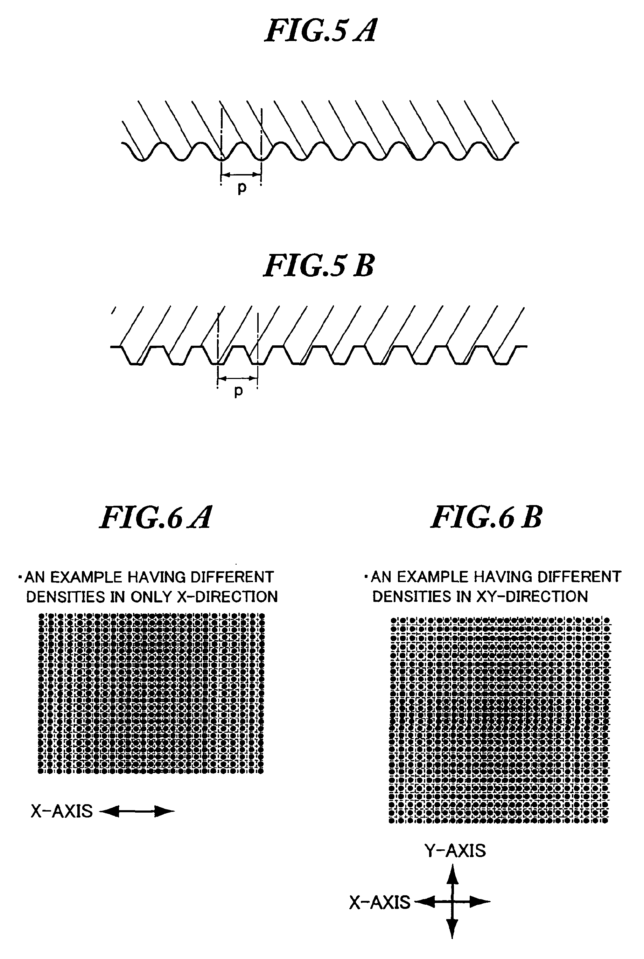

Fig. 5 shows the shapes of several uneven surfaces 11a₀. In fact, the concavo-convex portions of a sliding surface 11a₀ can have triangular sections (cones) shown in Fig. 4, curved sections (sine curves) shown in Fig. 5A, or trapezoid sections shown in Fig. 5B. Moreover, it is possible to use an irregular roughness rather than a regularly shaped roughness. Here, among the regularly shaped cross sections, pitch P between every two convex portions can be used as an index to indicate an extent of a roughness. On the other hand, among uneven surfaces each having an irregular roughness, a roughness parameter (concavo-convex average interval Sm or the like in accordance with JIS B0601) can be used as an index to indicate an extent of a roughness. In fact, the roughness of the uneven surface 11a₀ is an important value for setting an operational resolution for an information input device, and, if such a value is set within a range of 0.01 - 10 µm, it is possible to obtain an information input device having a high resolution with respect to a vibration frequency sensible by fingertip.

Fig. 6 shows an embodiment of the above-described uneven surface 11a₀. In this embodiment, the uneven surface 11a₀ has a roughness pattern consisting of a roughness corresponding to an actual position on the sliding surface 11a. Since the frequency of a vibration varies depending on an actual sliding position on the plate-like input members 11 and 12, it is possible for an operator (user) to recognize a slidingposition on the plate-like input members 11, 12 by sensing a vibration difference using his or her fingertips. Moreover, it is also possible to perform a sensitivity correction based on finger position and finger operational direction, by setting an appropriate roughness pattern.

Fig. 6A shows a pattern in which the density of a roughness varies in only X direction, and Fig. 6B shows a pattern in which the density of a roughness varies in both X and Y directions which are orthogonal to each other. In addition, it is also possible to form a pattern in which the density of a roughness varies in radial direction from the center of a sliding surface towards the edge portions thereof. In this way, it is possible to perform a sensitivity correction based on finger operational direction by linearly changing the roughness density, and also possible to perform a sensitivity correction based on finger position by changing the roughness density in radial direction from the center of a sliding surface.

Hereinafter, description will be given to explain an example of the information creating section for creating the input information in accordance with a relative position, a relative movement, or the like between the plate-like input members 11 and 12 described above.

In order to ensure a high pointing performance (input of position information) as an input device using GUI, the information input device of the present invention is required to input position information corresponding to a high resolution (about 1000 - 2000 dots in horizontal direction). Moreover, since the information input device of the present invention makes use of a relative displacement of finger position, the range of such displacement is not large (10 mm or less). In this way, the resolution of a relative displacement of the plate-like input members 11, 12 will be 10 µm or less.

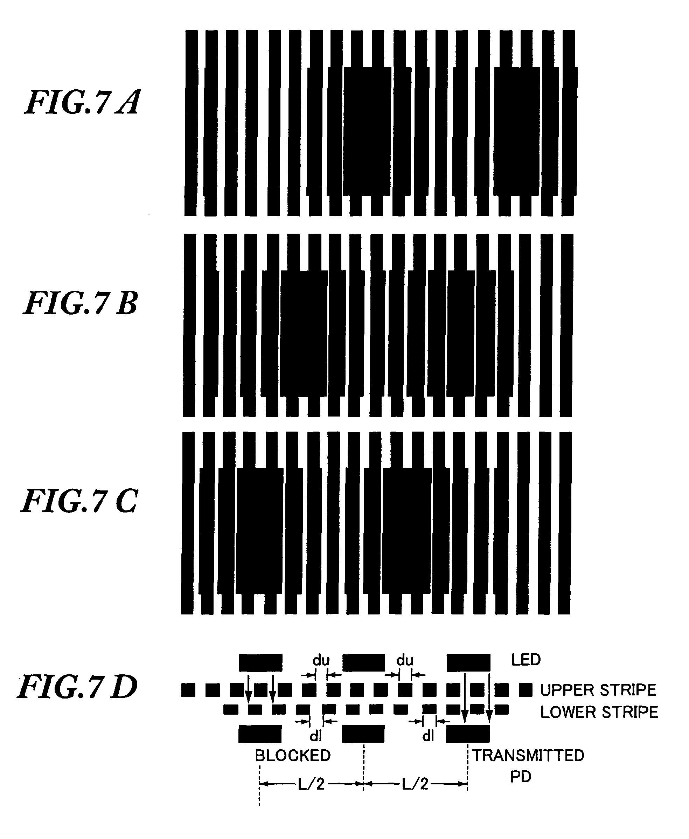

As one example of a sensor for detecting such a small relative displacement between the two plate-like input members 11 and 12, it is allowed to take a relative displacement sensor using moiré fringes shown in Figs. 7A to 7D. As is well known, moiré fringes originally refer to a wave pattern occurring from layers of minute meshes such as silk fabric. This phenomenon can be utilized to show minute displacements as changes of the wave pattern in a far greater scale, which is effective for the embodiment of the present invention where minute displacement detection is required.

The relative displacement sensor based on moiré fringes comprises two film-like sheets, each of which has light transmitting areas and light blocking areas alternately arranged in the form of stripes. The sheets are arranged on the targets of the displacement detection, i.e., on the sliding surfaces 11a and 12a of the upper and lower plate-like input members 11 and 12, respectively. In fact, the sheets are interposed between light-emitting devices (LEDs) and photodetectors (PDs) which are arranged on the inner sides of the upper and lower plate-like input members 11 and 12, respectively (see Fig. 7D; the light transmitting areas are shown in white, and the light blocking areas are shown in black). In each of the sheets, the transmitting areas and the blocking areas of the stripes have the same width. The stripes on the upper sheet (upper stripes) shall have a width du, and those on the lower sheet (lower stripes) have a width dl.

Next, description will be given to explain the operation of this relative displacement sensor. Figs. 7A to 7C show the two striped sheets overlapping each other, as viewed from above (the upper and lower sheets are slightly different in stripe width). Here, for the sake of an easy understanding, the lower sheet is shown as having a short longitudinal length. Since Fig. 7 is solely intended to visualize the moiré phenomenon, the positional relationship is not consistent with Fig. 7D. Now, when the upper sheet in the state of Fig. 7A moves to the left (in relative terms, the same as if the lower sheet moves to the right) as much as the width of a stripe, the moiré fringes resulting from the overlap will change as shown in Figs. 7B and 7C. For example, in the case of the leftmost photodetector (PD), the light transmitting state (Fig. 7A) shifts to the semi-transmitting state (Fig. 7B), and changes to the blocking state (Fig. 7C). That is, the output current of the photodetector PD decreases gradually from the ON state (where a maximum current flows) to the OFF state where no current flows. Further, when the upper sheet moves further to the left as much as the stripe width, then the output current changes from the OFF state to the ON state.

Then, the number n of changes of this current (ON to OFF, OFF to ON) can be counted to calculate the distance of displacement by (the stripe width of the sheet) x (the number n of changes of the current). For example, given the stripe width is 10 µm, it is possible to detect an amount of a displacement in units (precisions) of 10 µm.

In order to detect an amount of the above displacement and to detect the direction of the movement (right or left), three pairs of light-emitting devices (LEDs) and photodetectors (PD) are arranged as shown in Fig. 7D. Here, the state of the PD at the center (either ON state or OFF state) is compared with the states of the PDs on the right and left before a change. Then, the direction of movement, right or left, is determined depending on which PD had the same state. Incidentally, the interval L of the moiré fringes is inversely proportional to a difference between the widths du and dl of the upper and lower stripes, or given by L= du·dl/|du - dl | . The three pairs of photodetectors and light-emitting devices are arranged at a half interval L/2.

The foregoing description has dealt with the detection as to one direction (referred to as X-axis). Similarly, the movement in the orthogonal direction (referred to as Y-axis) can also be detected by arranging the foregoing three pairs of light-emitting devices and photodetectors in the Y-axis direction.

Up to this point, description has been given to explain a sensor of detecting a relative displacement by utilizing moiré fringes. However, the sensor should not be limited to the foregoing one, as long as it can detect such a relative displacement. For example, a thin film resistor sensor and a magnetic scale may be used as the relative displacement detecting sensors since they have high resolutions and can be formed in a thin sheet.

When using the information input device of the present embodiment of the present invention to perform a GUI pointing operation, it is possible to cover a wide pointing range by a short (narrow) movement based on the sliding of the plate-like input members 11 and 12, and to exactly input a minimum pointing in every pixel. On the other hand, in an input operation using a conventional mouse, when performing a position input using a mouse on a screen having a resolution of about SEGA (Super Extended Graphics Array: 1280 x 1024), since a human being's position adjusting accuracy is limited at a little less than 1 mm, inputting 280 pixels one by one makes it absolutely necessary to have a movement of about 12 cm. Different from the conventional mouse, the information input device of the present embodiment of the present invention can realize an input with fingertip's operational range at 100 mm or less.

Namely, by forming an irregularity (represented by convex and concave portions) of about 1 µm cycle (roughness) on the sliding surface 11a so that a vibration of 10 Hz can be generated when moving a fingertip slowly to effect a displacement of 10 µm within 1 second, a vibration stimulus of 10 Hz within 1 second will be a stimulus which is sufficiently decompose-recognizable by human being's fingertip. As a result, if such stimulus is made to correspond to 1 pixel on a screen, it is possible to at first satisfy a requirement of pointing resolution. Further, since such a resolution can cover a screen range of about 1000 pixels, if one tries to calculate what extent movement is required, it will be understood that a relative displacement of 10 mm (10 µm x 1000) is acceptable. In this way, it is possible to select each pixel and to operationally cover a screen having a high resolution by virtue of a minute movement of a fingertip. Moreover, when it is desired to obtain a further higher resolution, what is necessary is only to finely divide a concavo-convex cycle (an extent of a roughness) and to increase the number of concavo-convex portions corresponding to each pixel, as well as to increase a vibration frequency. In addition, if only a concavo-convex cycle is finely divided without altering the resolution, it is possible to perform an operation to cover a wide screen by virtue of a similar relative displacement.

Advantages obtainable by using the information input devices of the above embodiments of the present invention can be described as follows.
(1) Since a vibration generated by the vibration generating means can be sensed by fingertips as a touch feeling on a coarse surface, it is possible to sensuously provide an operator (user) with a relative displacement having a high resolution. In this way, when inputting information of movements in XY directions, it is possible to provide a fingertip controllability having a high resolution.
(2) Since the relative position controllability of fingertip has been improved and this results in a high resolution in performing a position input on a screen of GUI, it is possible to ensure the position input in a wide area even if a movable area is narrow, thereby making it possible to realize a highly efficient information input device even if it is compact in size.
(3) For example, it is possible to ensure a cursor movement on an entire area or a pointing operation on a high resolution screen including several-million pixels, by virtue of mouse movement only at an extent of about 10 mm. In this way, it is not necessary for an operator (user) to re-catch or re-hold a mouse during an input operation.
(4) Since the plate-like input members 11, 12 are held by fingertips during an input operation, it is possible to ensure a desired portability to realize an input operation having a high operational freedom. Further, since an essential input operation is for fingertips or portions of fingers to hold two plate-like members 11, 12 and slide the same, it is possible to perform an input involving an operation having a high resolution (i.e., causing fingertips to rub against each other). Moreover, since an input operation performed by fingertips is easy for an operator (user) to concentrate his or her attention, it is easy to reflect an operator's intention, rendering the input device suitable for performing a minute position input and making it possible to prevent an incorrect input.
(5) Since an input operation is performed by utilizing a high resolution originally possessed by human being, such an input operation can be made easy and it is possible to obtain a comfortable feeling in operation.
(6) Since it is allowed to consider that the susceptibility of human being's fingertips is equal on left and right hands, it is possible to obtain a good operational performance no matter the left or right hand is used to perform such an input operation. In addition, it is possible to obtain an adequate function even if a hand in use is not a dominant hand.
(7) Since it is possible to complement, by virtue of a pattern of a roughness formed on the sliding surface 11a₀, a difference in mobility or decomposition sensitivity caused due to different finger positions, it is possible to perform an input operation with a necessary resolution regardless of which position a finger is located.

## Claims

1. An information input device comprising:
a plate-like input member (11) slidable by fingertip of one hand;
an information creating section for creating input information in response to at least a relative position or a relative movement of the plate-like member (11);
vibration generating means (11a₀,12a₀) for generating a vibration by virtue of a relative movement of a sliding surface of the plate-like member (11),
wherein the generated vibration is propagated to the fingertip so as to allow an operator to recognize an amount of the relative movement of the plate-like member (11).

2. An information input device comprising:
two pieces of plate-like input members (11, 12) adapted to be held between fingertips or portions of fingers on one hand and relatively slidable with respect to each other;
an information creating section for creating input information in response to at least a relative position or a relative movement of the plate-like members (11, 12);
vibration generating means (11a₀,12a₀) for generating a vibration by virtue of a relative movement between sliding surfaces (11a, 12a) of the plate-like members (11,12),
wherein the generatedvibration is propagated to the fingertips so as to allow an operator to recognize an amount of the relative movement between the plate-like members (11,12).

3. An information input device according to claim 1 or 2, wherein the vibration generating means (11a₀,12a₀) has an uneven surface including minute concave and convex portions formed on at least one of the sliding surfaces (11a,12a).

4. The information input device according to any one of claims 1 to 3, wherein the vibration generating means (11a₀, 12a₀) is formed by interposing one or more spherical or cylindrical bodies (12a₀) each having a small curved surface between the sliding surfaces (11a, 12a), in a manner such that the vibration can be generated when the small curved surface moves over the uneven surface.

5. The information input device according to claim 4, wherein one or more spherical or cylindrical bodies (12a₀) are rotatably held by one of the sliding surfaces (11a,12a).

6. The information input device according to any one of claims 3 to 5, wherein the uneven surface has a roughness pattern consisting of a roughness corresponding to positions on the sliding surface (11a).

7. The information input device according to claim 6, wherein the roughness pattern is such a pattern that its roughness varies from the center of the sliding surface (11a) towards the edge portions thereof.

8. The information input device according to claim 6, wherein the roughness pattern is such a pattern that its roughness varies along one or both of X, Y directions orthogonal to each other on the sliding surface (11a).

9. The information input device according to any one of claims 3 to 8, wherein the roughness of the uneven surface is 0.01 - 10 µm, the diameter of spherical or cylindrical body (12a₀) is at least larger than such roughness.

10. The information input device according to any one of claims 1 to 9, wherein the plate-like input members (11,12) contain a vibration attenuating material for attenuating a superfluous high frequency vibration.

11. An information input method wherein a plate-like member (11) is slid by fingertip of one hand to create input information in response to a relative position or a relative movement of a sliding surface (11a) of the plate-like input member (11),
wherein the sliding surface (11a) is moved relatively to generate a vibration which is then propagated to the fingertip, thereby allowing an operator to recognize an amount of the relative movement of the plate-like member (11).
